# EUROPÄISCHE PATENTSCHRIFT

(11) **EP 0 446 387 B1**
(45) Veröffentlichungstag und Bekanntmachung des Hinweises auf die Patenterteilung: **17.08.1994**
(21) Anmeldenummer: 90104748.0
(22) Anmeldetag: 13.03.1990
(51) Int. Cl.: H04L 12/56

(54) **Koppelanordnung für die Aufnahme und Weiterleitung von nach einem asychronen Transfermodus übertragenen Nachrichtenzellen**
Connection circuit for receiving and forwarding information cells transmitted in an asynchronous transfer mode
Dispositif d'interconnexion pour la réception et la retransmission de cellules d'information transmises en mode de transfert asynchrone

(43) Veröffentlichungstag der Anmeldung: 18.09.1991
(73) Patentinhaber: SIEMENS AKTIENGESELLSCHAFT, 80333 München (DE)
(72) Erfinder: Kammerl, Anton, Dr.-Ing., D-8038 Gröbenzell (DE)

(56) Entgegenhaltungen:
- EP-A- 0 113 639
- EP-A- 0 315 919
- THE TRANS. OF THE INST. OF ELECTRONICS, INFORMATION & COMMUNICATION ENGINEERS, vol. E71, no. 9, September 1988, pages 869-875, Tokyo, JP; T. TAKAHASHI et al.: "Broadband packet switching network featuring dynamic link speed control"

## Beschreibung

Die Erfindung betrifft eine Koppelanordnung gemäß Oberbegriff des Patentanspruches 1.

Eine derartige Koppelanordnung ist bereits bekannt (US-PS 4 603 416). Dieser bekannten Koppelanordnung werden Nachrichtenzellen über eine Mehrzahl von Eingangsleitungen in festgelegten Zeitintervallen zugeführt. Die Aufnahme der über die einzelnen Eingangsleitungen eintreffenden Nachrichtenzellen in die Koppelanordnung erfolgt über eine zyklisch arbeitende Multiplexeinrichtung. Dabei wird zunächst der in den Nachrichtenzellen jeweils enthaltene Zellenkopf für eine Weiterleitung der jeweiligen Nachrichtenzelle mit Hilfe einer Speichersteueranordnung durch einen neuen Zellenkopf ersetzt. Zusammen mit einem solchen neuen Zellenkopf wird gleichzeitig eine Leitungsadresse bereitgestellt, die die für die jeweilige Nachrichtenzelle in Frage kommende Ausgangsleitung bezeichnet. Anschließend werden die mit einem neuen Zellenkopf versehenen Nachrichtenzellen in freie Speicherzellen eines eine Vielzahl von Speicherzellen aufweisenden zentralen Pufferspeichers für eine Zwischenspeicherung eingetragen. Die Adressen der dafür benutzten Speicherzellen werden dabei nach Maßgabe der zuvor erwähnten, zusammen mit den neuen Zellenköpfen bereitgestellten Leitungsadressen in durch diese Leitungsadressen bezeichnete, den erwähnten Ausgangsleitungen individuell zugeordnete Warteschlangenspeicher übernommen.

Die gerade erwähnten Warteschlangenspeicher werden zyklisch angesteuert, um anhand der darin jeweils enthaltenen Adressen diejenigen Speicherzellen des zentralen Pufferspeichers zu ermitteln, in denen an die Ausgangsleitungen als nächste weiterzuleitende Nachrichtenzellen gespeichert sind. Anhand der so ermittelten Adressen erfolgt dann eine Ansteuerung des zentralen Pufferspeichers für eine Abgabe der in Frage kommenden Nachrichtenzellen.

Darüber hinaus ist bereits eine Anordnung zur zeitgerechten Identifizierung von an Anschlußschaltungen angeschlossenen Leitungen und zur Codierung des Identifizierergebnisses in programmgesteuerten Datenvermittlungsanlagen, in denen jeder Anschlußschaltung eine bestimmte Nummer zugeordnet ist, bekannt (DE-PS 2 348 255). Bei dieser bekannten Anordnung weisen die Anschlußschaltungen Speichereinrichtungen und Gatterschaltmittel auf. Die Übernahme von auf den Leitungen auftretenden Informationen in die Speichereinrichtungen ist gruppenweise durch einen zentralen Abfragetakt steuerbar, wobei die Gatterschaltmittel ein Anforderungskriterium abgeben. Jeweils nach Abarbeitung einer zwischengespeicherten Gruppe von Anforderungen werden mit Hilfe des zentralen Abfragetaktes die inzwischen auf den Leitungen auftretenden Informationen als neue Anforderungsgruppe übernommen. Zur Identifizierung der ein Anforderungskeriterium aussendenden Anschlußschaltungen ist für jeweils eine Stelle des zur Kennzeichnung der Anschlußschaltungen verwendeten Codes eine Reihe von dezentralen Identifiziereinrichtungen vorhanden, die nach dem bekannten Koordinatenprinzip stufenweise angeordnet und über Anforderungs- und Rückstell-Leitungen miteinander verbunden sind. Zur Codierung und zur Zwischenspeicherung des Identifizierergebnisses sind je Stufe Codierschaltmittel und Register vorhanden.

Es ist nun Aufgabe der vorliegenden Erfindung, einen Weg zu zeigen, wie bei einer Koppelanordnung der eingangs genannten Art über die einzelnen Eingangsleitungen asynchron eintreffende Nachrichtenzellen weitgehend in der Reihenfolge ihres Eintreffens zwischengespeichert und anschließend an die in Frage kommenden Ausgangsleitungen weitergeleitet werden können.

Gelöst wird die vorstehend aufgezeigte Aufgabe bei einer Koppelanordnung der eingangs genannten Art durch die im Patentanspruch 1 angegebenen Merkmale.

Die Erfindung bringt den Vorteil mit sich, daß auf Eingangsleitungen zu beliebigen Zeitlagen nach einem asynchronen Transfermodus übertragene Nachrichtenzellen zunächst innerhalb der Koppelanordnung ohne Verwendung spezieller Synchronisiereinrichtungen weitgehend in der Reihenfolge ihres Eintreffens in einer zentralen Speicheranordnung zwischengespeichert und anschließend von dort aus im Zuge aufeinanderfolgender Steuerzyklen weitgehend in der Reihenfolge des Zwischenspeicherns nach Maßgabe freier Ausgangsleitungen weitergeleitet werden können.

Vorteilhafte Ausgestaltungen der Erfindung ergeben sich aus den abhängigen Ansprüchen. Der Vorteil dieser Ausgestaltungen besteht darin, daß durch die einzelnen angegebenen Maßnahmen das Zwischenspeichern und Weiterleiten von Nachrichtenzellen durch die Koppelanordnung noch stärker unter Berücksichtigung der Reihenfolge des Auftretens von Nachrichtenzellen auf den einzelnen Eingangsleitungen erfolgt.

Im folgenden wird nun die vorliegende Erfindung anhand von Zeichnungen beispielsweise näher erläutert.
FIG 1 zeigt ein Blockschaltbild einer Koppelanordnung gemäß der vorliegenden Erfindung,
FIG 2 zeigt ausschnittweise einen möglichen Aufbau einer in FIG 1 schematisch dargestellten Eingangsfixierstufe,
FIG 3 zeigt ausschnittweise einen möglichen Aufbau einer in FIG 1 dargestellten zentralen Steuereinrichtung und
FIG 4 zeigt ausschnittweise einen möglichen Aufbau einer in FIG 1 schematisch dargestellten Ausgangsfixierstufe.

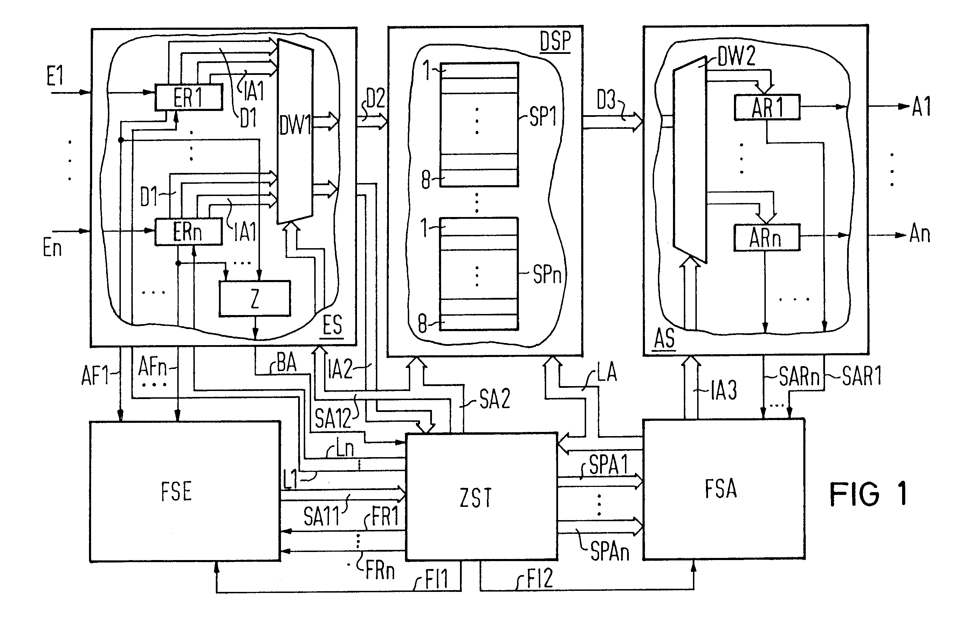

In FIG 1 ist eine Koppelanordnung schematisch dargestellt, an welche eine Mehrzahl von Eingangsleitungen E1 bis En sowie eine Mehrzahl von Ausgangsleitungen A1 bis An angeschlossen sind. Von diesen sind in FIG 1 lediglich die Eingangsleitungen E1 und En und die Ausgangsleitungen A1 und An angegeben. Auf den Eingangsleitungen und Ausgangsleitungen erfolgt jeweils eine Übertragung von Nachrichtenzellen im Zuge von virtuellen Verbindungen nach einem asynchronen Übertragungsverfahren ("Asynchronous Transfer Mode"). Bei den Nachrichtenzellen möge es sich um Zellen fester Länge handeln, welche jeweils über einen Zellenkopf mit einer die jeweilige virtuelle Verbindung bezeichnenden virtuellen Kanalnummer sowie einen Informationsteil verfügen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden.

Wie aus FIG 1 hervorgeht, sind die Eingangsleitungen E1 bis En gemeinsam an eine Eingangssteuereinrichtung ES angeschlossen. Diese Eingangssteuereinrichtung weist für jede der Eingangsleitungen ein gesondertes Eingangsregister auf. Zwei, den erwähnten Eingangsleitungen E1 und En zugeordnete Eingangsregister sind in FIG 1 mit ER1 und ERn bezeichnet. Jedes dieser Eingangsregister weist wenigstens eine der Länge der Nachrichtenzellen entsprechende Anzahl von Registerzellen auf. Dabei seien die auf den Eingangsleitungen übertragenen Nachrichtenzellen für eine Aufnahme in diese Registerzellen derart aufbereitet, daß der in diesen jeweils enthaltene Zellenkopf durch einen neuen, bei der Weiterleitung der jeweiligen Nachrichtenzelle an eine der Ausgangsleitungen A1 bis An zu benutzenden Zellenkopf ersetzt ist. Einem solchen neuen Zellenkopf ist eine interne Leitungsadresse beigefügt, die diejenige Ausgangsleitung bezeichnet, über die die jeweilige Nachrichtenzelle weiterzuleiten ist. Da ein solches Ersetzen eines in einer Nachrichtenzelle enthaltenen Zellkopfes bereits als sogenanntes Umwerteprinzip hinlänglich bekannt und nicht Gegenstand vorliegender Erfindung ist, wird hier darauf nicht näher eingegangen. Es sei hier lediglich darauf hingewiesen, daß den zuvor erwähnten Eingangsregistern ER1 bis ERn jeweils eine nach dem bekannten Umwerteprinzip arbeitende Einrichtung vorgeschaltet ist.

Die Eingangsregister ER1 bis ERn sind ausgangsseitig gemeinsam über jeweils zwei gesonderte Busleitungssysteme mit einer Datenweiche DW1 verbunden, die über ein Busleitungssystem SA12 von einer zentralen Steuereinrichtung ZST her steuerbar ist. Ein erstes dieser Busleitungssysteme D1 dient dabei für die Übertragung von in das jeweilige Eingangsregister zuvor aufgenommenen Nachrichtenzellen einschließlich des jeweils zugehörigen Zellenkopfes, während das zweite der Busleitungssysteme IA1 bei der Übertragung von Nachrichtenzellen die jeweils zugehörige, zuvor erwähnte interne Leitungsadresse führt. Die Eingangsregister ER1 bis ERn sind darüber hinaus jeweils über eine Anforderungsleitung mit einer Eingangsfixierstufe FSE und einer Zähleranordnung Z verbunden. Die Anforderungsleitungen, die entsprechend ihrer Zugehörigkeit zu den Eingangsregistern mit AF1 bis AFn bezeichnet sind, führen immer dann ein festgelegtes Anforderungssignal, wenn in dem zugehörigen Eingangsregister eine vollständige Nachrichtenzelle vorliegt. Die einzelnen Anforderungssignale sind von der zentralen Steuereinrichtung ZST her separat über jeweils eine Löschsignalleitung rücksetzbar. Die Löschsignalleitungen sind entsprechend ihrer Zuordnung zu den Eingangsregistern ER1 bis ERn mit L1 bis Ln bezeichnet.

Die zuvor erwähnte Zähleranordnung Z ist ausgangsseitig über eine Steuerleitung BA mit der zentralen Steuereinrichtung ZST verbunden, um dieser durch ein Zählersignal das vorliegen einer festgelegten Anzahl von Anforderungssignalen anzuzeigen. Diese Anzahl kann im übrigen auch in Abhängigkeit vom Verkehrsaufkommen auf den Eingangsleitungen E1 bis En variabel beispielsweise über nicht dargestellte Steuerleitungen von der zentralen Steuereinrichtung ZST her festgelegt sein.

Die Datenweiche DW1 ist ausgangsseitig einerseits über ein den Bucleitungssystemen IA1 der Eingangsregister ER1 bis ERn entsprechendes Busleitungssystem IA2 mit der zentralen Steuereinrichtung ZST und andererseits über ein den Busleitungssystemen D1 der Eingangsregister entsprechendes Busleitungssystem D2 mit einer zentralen Speicheranordnung DSP verbunden. In dieser zentralen Speicheranordnung ist jeder der Eingangsleitungen E1 bis En ein Speicherbereich mit einer Mehrzahl von Speicherzellen, beispielsweise 8 Speicherzellen, zugeordnet. Die einzelnen Speicherbereiche sind in FIG 1 entsprechend ihrer Zuordnung zu den Eingangsleitungen mit SP1 bis SPn bezeichnet.

Von der zentralen Steuereinrichtung ZST her führen zu der bereits erwähnten Eingangsfixierstufe FSE mit FR1 bis FRn bezeichnete Freigabeleitungen sowie eine für die Übertragung von Fixierimpulsen dienende Steuerleitung FI1. In der Gegenrichtung, d. h. von der Eingangsfixierstufe FSE her, führt dagegen ein Adressensignale führendes Busleitungssystem SA11 zu der zentralen Steuereinrichtung. Diese steht außerdem über ein Adressensignale und Steuersignale führendes Busleitungssystem SA2 mit der zentralen Speicheranordnung DSP in Verbindung. In diesem Busleitungssystem ist im übrigen auch das bereits erwähnte, für die Steuerung der Datenweiche DW1 dienende Busleitungssystem SA12 enthalten.

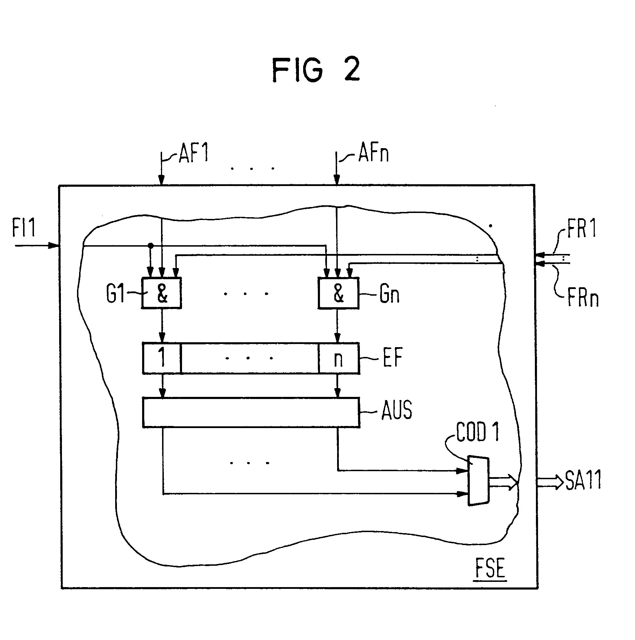

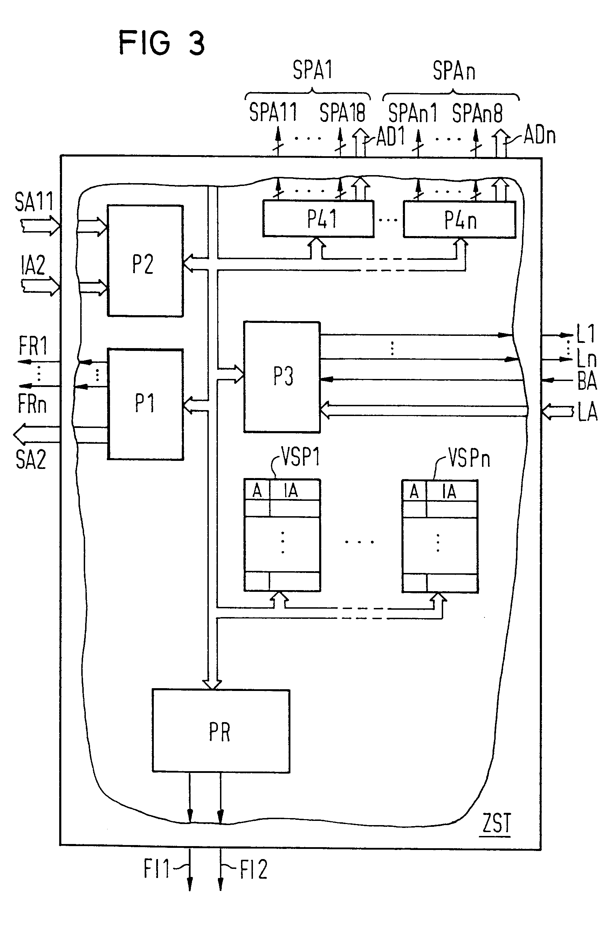

Es wird nun im folgenden anhand der Figuren 2 und 3 der Aufbau der Eingangsfixierstufe FSE und der zentralen Steuereinrichtung ZST erläutert, um anschließend zunächst auf die Steuerungsvorgänge beim Zwischenspeichern von Nachrichtenzellen in der zentralen Speicheranordnung DSP einzugehen.

Gemäß FIG 2 ist in der Eingangsfixierstufe FSE eingangsseitig jedem der oben erwähnten Eingangsregister ER1 bis ERn ein gesoncertes UND-Glied mit drei Eingängen zugeordnet. Jedem dieser UND-Glieder, die entsprechend ihrer Zuordnung zu den Eingangsregistern mit G1 bis Gn bezeichnet sind, sind eine der oben erwähnten Anforderungsleitungen (AF1 bis AFn), eine der Freigabeleitungen (FR1 bis FRn) sowie die Steuerleitung FI1 zugeführt. Ausgangsseitig sind die UND-Glieder G1 bis Gn jeweils mit einer gesonderten Registerstelle eines Eingangsfixierregisters EF verbunden. Die Ausgänge dieser Registerzellen sind an eine Auswahlschaltung AUS angeschlossen, die ihrerseits mit einem Codierer COD1 in Verbindung steht. Dieser Codierer liefert über das bereits erwähnte Busleitungssystem SA11 noch zu erläuternde Adressensignale an die zentrale Steuereinrichtung ZST.

Gemäß FIG 3 ist die zentrale Steuereinrichtung ZST als Prozessorsystem mit einem Prozessor PR ausgebildet. An einem internen Busleitungssystem dieses Prozessors sind u. a. drei mit P1 bis P3 bezeichnete Schnittstelleneinrichtungen vorgesehen, wobei an die Schnittstelleneinrichtung P1 die Freigabeleitungen FR1 bis FRn und das Busleitungssystem SA2, an die Schnittstelleneinrichtung P2 die Busleitungssysteme SA11 und IA2 und an die Schnittstelleneinrichtung P3 die Löschsignalleitungen L1 bis Ln und die Steuerleitung BA angeschlossen sind. Darüber hinaus ist an das interne Busleitungssystem des Prozessors PR eine Mehrzahl von Verbindungsspeichern VSP1 bis VSPn angeschlossen. Diese Verbindungsspeicher sind den zuvor erwähnten Speicherbereichen SP1 bis SPn der zentralen Speicheranordnung DSP individuell zugeordnet. Jeder der Verbindungsspeicher weist dabei eine der Anzahl der in dem jeweils zugeordneten Speicherbereich vorhandenen Speicherzellen entsprechende Anzahl von Verbindungsspeicherzellen auf. In jeder dieser Verbindungsspeicherzellen ist in einem ersten, mit A bezeichneten Bereich ein Belegungssignal speicherbar, wenn in der zugeordneten Speicherzelle der zentralen Speicheranordnung DSP gerade eine Nachrichtenzelle für eine Weiterleitung zwischengespeichert ist. In einem zweiten Speicherbereich IA ist dagegen die für die Weiterleitung einer zwischengespeicherten Nachrichtenzelle festgelegte, oben erwähnte interne Leitungsadresse eintragbar.

Im folgenden werden nun zunächst anhand der vorstehend beschriebenen Schaltungsteile der Figuren 1 bis 3 die Steuerungsvorgänge für die Zwischenspeicherung von über die Eingangsleitungen E1 bis En übertragenen Nachrichtenzellen in der zentralen Speicheranordnung DSP beschrieben.

Die über die Eingangsleitungen E1 bis En nach einem asynchronen Transfermodus übertragenen Nachrichtenzellen werden nach einer oben erwähnten Umwertung des darin jeweils enthaltenen Zellenkopfes und nach Beifügen einer für die Weiterleitung erforderlichen internen Leitungsadresse in die in Frage kommenden Eingangsregister (ER1 bis ERn in FIG 1) aufgenommen. Bei Vorliegen einer vollständigen Nachrichtenzelle gibt dann das jeweilige Eingangsregister über die zugehörige Anforderungsleitung (AF1 bis AFn) ein Anforderungssignal an das zugeordnete UND-Glied (G1 bis Gn in FIG 2) der Eingangsfixierstufe FSE ab. Gleichzeitig ermittelt die Zähleranordnung Z die Anzahl der von den Eingangsregistern abgegebenen Anforderungssignale. Wird dabei eine vorgegebene Anzahl erreicht, so erhält die zentrale Steuereinrichtung ZST über die Steuerleitung BA ein entsprechendes Zählersignal zugeführt. Auf das Auftreten eines solchen Zählersignals hin ermittelt dann die zentrale Steuereinrichtung ZST anhand der Bereiche A der einzelnen Verbindungsspeicher VSP1 bis VSPn (FIG 3), ob in den einzelnen Speicherbereichen SP1 bis SPn der zentralen Speicheranordnung DSP wenigstens noch eine Speicherzelle für die Aufnahme einer Nachrichtenzelle zur Verfügung steht. Ist dies der Fall, so wird für den jeweiligen Speicherbereich über eine diesen zugeordnete Freigabeleitung (FR1 bis FRn in FIG 1) ein Freigabesignal zu der Eingangsfixierstufe FSE hin übertragen. Im Anschluß daran gibt die zentrale Steuereinrichtung ZST über die Steuerleitung FI1 einen Fixierimpuls an die Eingangsfixierstufe ab. Dieser bewirkt, daß alle diejenigen über die Anforderungsleitungen AF1 bis AFn den UND-Gliedern G1 bis Gn (FIG 2) zugeführten Anforderungssignale in das Eingangsfixierregister EF übernommen werden, für die zuvor über die Freigabeleitungen FR1 bis FRn von der zentralen Steuereinrichtung ZST her ein Freigabesignal abgegeben worden ist. Die einzelnen Registerzellen dieses Eingangsfixierregisters werden dann durch die nachfolgende Auswahlschaltung AUS der Reihe nach für eine Bereitstellung der Registerzelleninhalte angesteuert. Ein bereitgestelltes Anforderungssignal bewirkt dabei, daß der der Auswahlschaltung AUS nachgeschaltete Codierer COD1 eine dem jeweiligen Anforderungssignal und damit eine dem jeweiligen Eingangsregister (ER1 bis ERn in FIG 1) festzugeordnete Adresse über das Busleitungssystem SA11 der zentralen Steuereinrichtung ZST zuführt.

Von der zentralen Steuereinrichtung ZST werden anhand der nacheinander über das Busleitungssystem SA11 übertragenen Adressen, die gleichzeitig die Anfangsadressen der den in Frage kommenden Eingangsleitungen zugeordneten Speicherbereiche SP1 bis SPn der zentralen Speicheranordnung DSP darstellen, nach Maßgabe der in den Verbindungsspeichern VSP1 bis VSPn (FIG 3) gespeicherten Informationen innerhalb der in Frage kommenden Speicherbereiche Speicherzellen ermittelt. Die Adresse der jeweiligen Speicherzelle wird dabei an die gerade über das Busleitungssystem SA11 übertragene Adresse angefügt. Die daraus resultierende Gesamtadresse wird anschließend über das Busleitungssystem SA2 abgegeben. Anhand dieser Gesamtadresse erfolgt nun zunächst eine Einstellung der in FIG 1 dargestellten Datenweiche DW1, um die in dem in Frage kommenden Eingangsregister (ER1 bis ERn) gerade gespeicherte Nachrichtenzelle dem zentralen Datenspeicher DSP über das Busleitungssystem D2 zuzuführen. Gleichzeitig wird der zentralen Steuereinrichtung ZST über das Busleitungssystem IA2 die zusammen mit der Nachrichtenzelle gespeicherte, oben bereits erwähnte interne Leitungsadresse zugeführt. Dabei wird diese interne Leitungsadresse in diejenige Verbindungsspeicherzelle (Bereich IA) der Verbindungsspeicher VSP1 bis VSPn eingetragen, die durch die gerade bereitgestellte Gesamtadresse bezeichnet ist. Gleichzeitig wird in den Bereich A dieser Verbindungsspeicherzelle ein Belegungssignal eingetragen.

Anschließend erfolgt dann durch Abgabe von Steuersignalen über das Busleitungssystem SA2 von der zentralen Steuereinrichtung ZST her eine Ansteuerung der zentralen Speicheranordnung DSP, um die über das Busleitungssystem D2 bereitgestellte Nachrichtenzelle in die durch die zuvor erwähnte Gesamtadresse bezeichnete Speicherzelle aufzunehmen. Dieser Vorgang wird von der zentralen Steuereinrichtung durch die Abgabe eines Löschsignals über die gerade in Frage kommende Löschsignalleitung abgeschlossen (L1 bis Ln in FIG 1). Dieses Löschsignal bewirkt dabei, daß das gerade bearbeitete, über eine der Anforderungsleitungen AF1 bis AFn bereitgestellte Anforderungssignal in dem jeweiligen Eingangsregister (ER1 bis ERn in FIG 1) rückgesetzt wird.

Die gerade erläuterten Steuerungsvorgänge für die Bearbeitung eines in dem Eingangsfixierregister EF gespeicherten Anforderungssignals werden fortgesetzt, bis von der Auswahlschaltung AUS (FIG 2) sämtliche in dem Eingangsfixierregister EF vorhandenen Registerzellen einmal angesteuert worden sind. Damit ist dann ein Schreib-Steuerzyklus beendet.

Bisher wurde lediglich der Fall betrachtet, daß die Zwischenspeicherung von Nachrichtenzellen dann erfolgt, wenn von der Zähleranordnung Z (FIG 1) das Vorliegen einer festgelegten Anzahl von Anforderungssignalen durch Abgabe eines Zählersignals über die Steuerleitung BA angezeigt wird. Darüber hinaus erfolgt jedoch in der zentralen Steuereinrichtung ZST zusätzlich eine Zeitüberwachung derart, daß bei Nichtbereitstellen eines Zählersignals durch die Zähleranordnung Z spätestens nach dem Ablauf einer festgelegten, mit dem Ende eines vorangegangenen SchreibSteuerzyklus beginnenden Zeitspanne die gerade von den Eingangsregistern ER1 bis ERn abgegebenen Anforderungssignale in der oben angegebenen Weise in das Eingangsfixierregister EF aufgerommen und von der zentralen Steuereinrichtung ZST her abgearteitet werden. Die festgelegte Zeitspanne möge beispielsweise der halben Übertragungsdauer einer Nachrichtenzelle auf einer Eingangsleitung entsprechen.

In folgenden werden nun anhand der Figuren 1, 3 und 4 die für die Weiterleitung von in der zentralen Speicheranordnung DSP zwischengespeicherten Nachrichtenzellen vorgesehenen Schaltungsteile sowie deren Wirkungsweise näher erläutert.

Gemäß FIG 1 weist die darin dargestellte Koppelanordnung eine Ausgangssteuereinrichtung AS auf, die mit der zentralen Speicheranordnung DSP über ein Busleitungssystem D3 verbunden ist. Dieses Busleitungssystem ist einer Datenweiche DW2 zugeführt, die über ein Busleitungssystem IA2 von einer Ausgangsfixierstufe FSA her steuerbar ist. Diese Datenweiche weist ausgangsseitig eine der Anzahl der der Koppelanordnung zugehörigen Ausgangsleitungen A1 bis An entsprechende Anzahl von Busleitungssystemen auf, die jeweils dem Busleitungssystem D3 entsprechen. An diese Busleitungssysteme ist jeweils ein mit einer der Ausgangsleitungen verbundenes Ausgangsregister angeschlossen. Die Ausgangsregister, die entsprechend ihrer Zuordnung zu den Ausgangsleitungen mit AR1 bis ARn bezeichnet sind, stehen zusätzlich mit der zuvor erwähnten Ausgangsfixierstufe FSA über jeweils eine Steuerleitung in Verbindung. Die einzelnen Steuerleitungen sind mit SAR1 bis SARn bezeichnet und dienen für die Übertragung eines Steuersignals, durch welches das Belegtsein des jeweiligen Ausgangsregisters angezeigt wird.

Von der Ausgangsfixierstufe FSA führt darüber hinaus ein für die Übertragung von Adressensignalen und Steuersignalen dienendes Busleitungssystem LA zu der zentralen Speicheranordnung DSP und zu der zentralen Steuereinrichtung ZST. Von der zentralen Steuereinrichtung her verlaufen zu der Ausgangsfixierstufe FSA zusätzlich mit SPA1 bis SPAn bezeichnete Busleitungssysteme sowie eine für die Übertragung von Fixierimpulsen dienende Steuerleitung FI2. Wie aus FIG 3 hervorgeht, sind die einzelnen Busleitungssysteme über mit P41 bis P4n bezeichnete Schnittstelleneinrichtungen an das interne Busleitungssystem des Prozessors PR angeschlossen. Jedes der Busleitungssysteme SPA1 bis SPAn ist dabei aus einer der Anzahl der in den einzelnen Verbindungsspeichern VSP1 bis VSPn vorhandenen Verbindungsspeicherzellen entsprechenden Anzahl von Mehrfachleitungen sowie einem für die Übertragung von Adressensignalen dienenden Adressenbusleitungssystem gebildet. In FIG 3 sind für das Busleitungssystem SPA1 die Mehrfachleitungen bzw. das zugehörige Adressenbusleitungssystem mit SPA11 bis SPA18 bzw. AD1 bezeichnet. In entsprechender Weise führen die Mehrfachleitungen bzw.das Adressenbusleitungssystem des Busleitungssystems SPAn die Bezeichnung SPAn1 bis SPAn8 bzw. ADn.

Wie aus FIG 3 außerdem hervorgeht, ist das der zentralen Steuereinrichtung zugeführte Busleitungssystem LA über die bereits oben erwähnte Schnittstelleneinrichtung P3 an das interne Busleitungssystem des Prozessors PR angeschlossen.

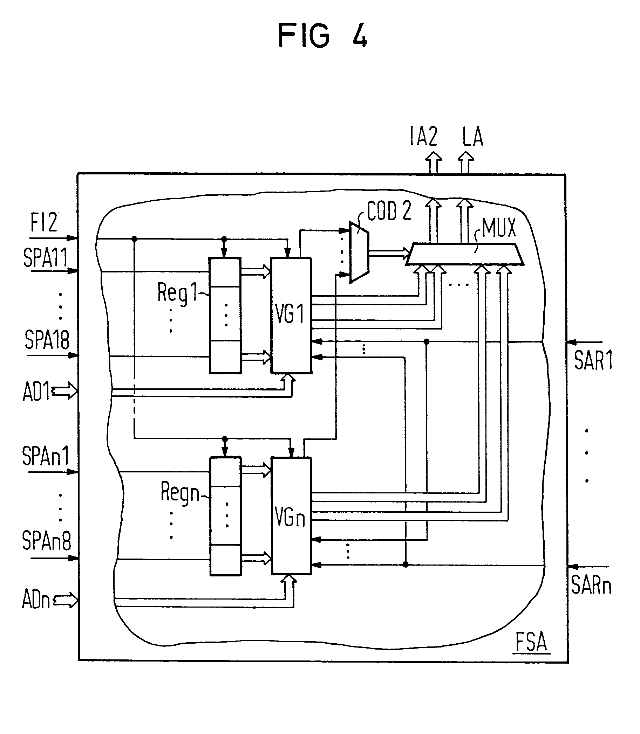

Gemäß FIG 4 sind die Mehrfachleitungen jedes der Busleitungssysteme SPA1 bis SPAn gemeinsam an ein gesondertes Register angeschlossen. Die Register sind entsprechend der Busleitungssysteme mit Reg1 bis Regn bezeichnet. Den Registern ist jeweils eine Vergleicheranordnung (VG1 bis VGn) nachgeschaltet, wobei jeder der Vergleicheranordnungen das den Mehrfachleitungen eines Busleitungssystems (SPA1 bis SPAn) zugehörige Adressenbusleitungssystem zugeführt ist. Die genannten Register und Vergleicheranordnungen sind außerdem über Steuereingänge mit der Steuerleitung FI2 verbunden.

Die Vergleicheranordnungen VG1 bis VGn sind jeweils über einen Steuerausgang an einen gemeinsamen Codierer COD2 angeschlossen. Darüber hinaus sind diesen Vergleicheranordnungen über gesonderte Eingänge die bereits oben erwähnten Steuerleitungen SAR1 bis SARn zugeführt. Schließlich weist jede der Vergleicheranordnungen als Ausgänge zwei getrennte Busleitungssysteme auf, die einer Datenweiche MUX zugeführt sind. Diese Datenweiche ist von dem Codierer COD2 her steuerbar und ausgangsseitig mit den bereits erwähnten Busleitungssystemen LA und IA2 verbunden.

Nachdem anhand der Figuren 1, 3 und 4 die in die Weiterleitung von in der zentralen Speicheranordnung DSP zwischengespeicherten Nachrichtenzellen einbezogenen Schaltungsteile beschrieben worden sind, wird nun noch deren Zusammenwirken erläutert.

Von der zentralen Steuereinrichtung ZST werden durch Abgabe von Fixierimpulsen aufeinanderfolgende Lese-Steuerzyklen aktiviert. In einem solchen Lese-Steuerzyklus werden dabei zunächst mit dem Auftreten eines Fixierimpulses die Inhalte (Bereiche A und IA in FIG 3) der einzelnen Verbindungsspeicher VSP1 bis VSPn über die Busleitungssysteme SPA1 bis SPAn in die Register Reg1 bis Regn übertragen und dort festgehalten. Mit dem Auftreten des betreffenden Fixierimpulses übernimmt außerdem die den jeweiligen Registern nachgeschaltete Vergleicheranordnung über das mit dieser verbundene Adressenbusleitungssystem von der zentralen Steuereinrichtung ZST her eine Vergleichsadresse. Durch diese ist diejenige Verbindungsspeicherzelle des in Frage kommenden Verbindungsspeichers (VSP1 bis VSPn) bezeichnet, in welche im Zuge der Zwischenspeicherung von Nachrichtenzellen als letztes in die Bereiche A und IA Eintragungen vorgenommen worden sind. Wie bereits oben erwähnt, werden solche Eintragungen immer dann vorgenommen, wenn in die der jeweiligen Verbindungsspeicherzelle zugeordnete Speicherzelle der zentralen Speicheranordnung DSP eine Nachrichtenzelle zwischengespeichert wird.

Im Zuge eines gerade begonnenen Lese-Steuerzyklus werden dann in einem ersten Hauptzyklus die einzelnen Vergleicheranordnungen VG1 bis VGn nacheinander in einer festgelegten Reihenfolge aktiviert. Dabei wird von der jeweiligen Vergleicheranordnung her eine festgelegte Anzahl aufeinanderfolgender Registerzellen des vorgeschalteten Registers (Reg1 bis Regn in FIG 4) überprüft, ob in diesen jeweils ein Belegungssignal gespeichert ist. Begonnen wird dabei mit einer Registerzelle, deren Adresse unmittelbar auf die zuvor von der zentralen Steuereinrichtung ZSRT bereitgestellte Vergleichsadresse folgt. Bei Vorliegen eines Belegungssignals Überprüft die Vergleicheranordnung anhand der zusammen mit dem Belegungssignal gespeicherten internen Leitungsadresse, ob das durch diese bezeichnete Ausgangsregister (AR1 bis ARn in FIG 4) gerade für die Aufnahme einer Nachrichtenzelle frei ist. Ist dies der Fall, so erfolgt über den Codierer COD2 eine solche Einstellung der Datenweiche MUX, daß über diese die beiden Busleitungssysteme LA und IA2 mit der Vergleicheranordnung verbunden sind. Im Anschluß daran wird über das Busleitungssystem IA2 mit Hilfe der gerade erwähnten internen Leitungsadresse die Datenweiche DW2 auf das durch die gerade erwähnte interne Leitungsadresse bezeichnete Ausgangsregister (AR1 bis ARn) eingestellt. Über das Busleitungssystem LA werden dagegen Steuersignale sowie Adressensignale übertragen, um diejenige Speicherzelle der zentralen Speicheranordnung DSP für die Abgabe einer zwischengespeicherten Nachrichtenzelle anzusteuern, für welche von der Vergleicheranordnung ein Belegungssignal in dem vorgeschalteten Register festgestellt worden ist. Die von der zentralen Speicheranordnung abgegebene Nachrichtenzelle wird dann in das in Frage kommende Ausgangsregister für eine Weiterleitung an die zugeordnete Ausgangsleitung (A1 bis An) übernommen. Auf die Übernahme einer Nachrichtenzelle hin gibt das betreffende Ausgangsregister über eine der Steuerleitungen SAR1 bis SARn ein Steuersignal an die Ausgangsfixierstufe FSA ab, um dieser das Belegtsein anzuzeigen. Dieses Steuersignal bleibt bestehen, bis die in das Ausgangsregister übernommene Nachrichtenzelle weitergeleitet ist.

Die über das Busleitungssystem LA übertragenen Adressensignale bewirken außerdem, daß von dem Prozessor PR der zentralen Steuereinrichtung ZST der Inhalt der durch diese Adressensignale bezeichneten Verbindungsspeicherzelle gelöscht wird.

Die gerade für eine der Vergleicheranordnungen (VG1 bis VGn) erläuterten Steuerungsvorgänge laufen der Reihe nach auch in allen übrigen Vergleicheranordnungen ab, so daß in dem ersten Hauptzyklus aus jedem der Speicherbereiche SP1 bis SPn der zentralen Speicheranordnung DSP ggf. die durch die Vergleicheranordnung festgelegte Anzahl von Nachrichtenzellen ausgelesen wird. An diesen ersten Hauptzyklus schließen sich weitere entsprechende Hauptzyklen an, bis von den Vergleicheranordnungen VG1 bis VGn sämtliche Registerzellen des jeweils vorgeschalteten Registers einmal hinsichtlich des Vorhandenseins eines Belegungssignals abgefragt worden sind. Sind beispielsweise 8 Speicherzellen in einem Speicherbereich der zentralen Speicheranordnung DSP und damit 8 Registerzellen in jedem der Register Reg1 bis Regn vorgesehen, so ergeben sich also 4 Hauptzyklen, wenn in jedem Hauptzyklus 2 Registerzellen pro Register berücksichtigt werden.

Die zu Beginn eines Lese-Steuerzyklus in die einzelnen Register Reg1 bis Regn übernommenen Belegungssignale, die im Zuge der zuvor erläuterten Hauptzyklen aufgrund des Belegtseins von Ausgangsregistern (AR1 bis ARn) nicht bearbeitet werden konnten, werden beispielsweise in weiteren, den Hauptzyklen entsprechenden Nebenzyklen nochmals von den einzelnen Vergleicheranordnungen VG1 bis VGn abgefragt, um ggf. die diesen Belegungssignalen entsprechenden Nachrichtenzellen innerhalb des jeweiligen Lese-Steuerzyklus weiterzuleiten. Die Anzahl der von den einzelnen Vergleicheranordungen in einem Nebenzyklus jeweils berücksichtigten aufeinanderfolgenden Registerzellen der vorgeschalteten Register ist dabei größer gewählt als die in den Hauptzyklen festgelegte Anzahl. Bei dem zuvor angegebenen Beispiel kann diese Anzahl beispielsweise mit 4 festgelegt sein, so daß insgesamt 2 derartige Nebenzyklen durchgeführt werden. Nach diesen Nebenzyklen ist dann der gerade ablaufende Lese-Steuerzyklus beendet. Gegebenenfalls noch in den Registern Reg1 bis Regn vorhandene Belegungssignale verbleiben dort und werden in einen unmittelbar nachfolgenden Lese-Steuerzyklus wieder miteinbezogen. Dabei können diese Belegungssignale ggf. auch mit einer höheren Priorität gegenüber den neu in die Register aufgenommenen Belegungssignalen bearbeitet werden, wenn beispielsweise für die in Frage kommenden Belegungssignale individuell ein Prioritätskennzeichen vorgesehen ist. Diese so gekennzeichneten Belegungssignale könnten dann zu Beginn des jeweiligen Steuerzyklus vor den erwähnten Hauptzyklen bearbeitet werden, falls in der Zwischenzeit durch die in Frage kommenden Ausgangsregister (AR1 bis ARn) eine Bereitschaft für die Aufnahme einer Nachrichtenzelle angezeigt ist.

Abschließend sei noch darauf hingewiesen, daß vorstehend zwar erläutert worden ist, daß den einzelnen Eingangsleitungen E1 bis En innerhalb der zentralen Speicheranordnung DSP jeweils ein Speicherbereich (SP1 bis Spn) fest zugeordnet ist. Die Zuordnung von Speicherbereichen kann jedoch auch von der zentralen Steuereinrichtung ZST her dynamisch erfolgen, beispielsweise in Abhängigkeit vom Verkehrsaufkommen auf den einzelnen Eingangsleitungen.

## Patentansprüche

1. Koppelanordnung für die Aufnahme und Zwischenspeicherung vor über eine Mehrzahl von Eingangsleitungen (E1,..., En) nach einem asynchronen Transfermodus übertragenen Nachrichtenzellen und Weiterleitung zwischengespeicherter Nachrichtenzellen nach Maßgabe einer darin jeweils enthaltenen Wegeinformation an eine einer Mehrzahl von Ausgangsleitungen (A1, ..., An) zugehörige Ausgangsleitung, mit einer eine Mehrzahl von Speicherzellen aufweisenden zentralen Speicheranordnung (DSP), wobei in jeder Speicherzelle eine Nachrichtenzelle vor einer Weiterleitung zwischenspeicherbar ist,
**dadurch gekennzeichnet**,
daß den Eingangsleitungen (E1,..., En) jeweils einerseits ein Speichermittel (ER1,..., ERn), in welches wenigstens eine vollständige, über die jeweilige Eingangsleitung übertragene Nachrichtenzelle aufnehmbar ist, und andererseits innerhalb der zentralen Speicheranordnung (DSP) ein eine Mehrzahl von Speicherzellen umfassender Speicherbereich (SP1, ..., SPn) zugeordnet ist,
daß eine zentrale Steuereinrichtung (ZST, FSE, FSA) vorgesehen ist, die derart ausgestaltet ist und mit den Speichermitteln (ER1, ..., ERn) und der zentralen Speicheranordnung (DSP) derart verbunden ist, daß das Vorliegen einer vollständigen Nachrichtenzelle von dem jeweiligen Speichermittel (ER1, ..., ERn) durch Abgabe eines Anforderungssignals der zentralen Steuereinrichtung (ZST, FSE, FSA) angezeigt wird,
daß in festgelegten, einem Bruchteil der Übertragungsdauer einer Nachrichtenzelle entsprechenden Zeitabständen bzw. bei Auftreten einer vorgegebenen Anzahl von Anforderungssignalen jeweils im Zuge eines Schreib-Steuerzyklus von der zentralen Steuereinrichtung zunächst die gerade vorliegenden Anforderungssignale als Anforderungssignal-Gruppe festgehalten werden,
daß anschließend die der jeweiligen Anforderungssignal-Gruppe zugeordneten, zuvor in die Speichermittel (ER1, ..., ERn) aufgenommenen Nachrichtenzellen nach Maßgabe einer der zentralen Steuereinrichtung (ZST, FSE, FSA) zur Verfügung stehenden, für die zentrale Speicheranordnung (DSP) geführten Belegungstabelle in durch Nachrichtenzellen nicht belegte Speicherzellen der in Frage kommenden Speicherbereiche (SP1, ..., SPn) der zentralen Speicheranordnung (DSP) übertragen werden,
daß mit dem Übertragen der Nachrichtenzellen in die zentrale Speicheranordnung außerdem die in diesen jeweils enthaltene Wegeinformation in die Belegungstabelle eingetragen wird,
daß in aufeinanderfolgenden Lese-Steuerzyklen jeweils der aktuelle Inhalt der Belegungstabelle von der zentralen Steuereinrichtung (ZST, FSE, FSA) festgehalten wird
und daß im Zuge des jeweiligen Lese-Steuerzyklus nach Maßgabe des jeweils gerade festgehaltenen aktuellen Inhalts der Belegungstabelle und zur Verfügung stehender Informationen bezüglich des Betriebszustandes der Ausgangsleitungen (A1, ..., An) die in den einzelnen Speicherbereichen der zentralen Speicheranordnung (DSP) für eine Weiterleitung anstehenden Nachrichtenzellen unter Berücksichtigung der Reihenfolge ihres Zwischenspeicherns den in Frage kommenden Ausgangsleitungen zugeführt werden.

2. Koppelanordnung nach Anspruch 1,
**dadurch gekennzeichnet**,
daß von den Speichermitteln (ER1,..., ERn) abgegebene Anforderungssignale lediglich dann in eine Anforderungssignal-Gruppe einbezogen werden, wenn von der zentralen Steuereinrichtung (ZST, FSE, FSA) anhand der Belegungstabelle für den jeweiligen in Frage kommenden Speicherbereich der zentralen Speicheranordnung (DSP) wenigstens eine für das Zwischenspeichern einer Nachrichtenzelle bereitstehende Speicherzelle ermittelt wird.

3. Koppelanordnung nach Anspruch 1 oder 2,
**dadurch gekennzeichnet**,
daß die festgelegten Zeitabstände für die Schreib-Steuerzyklen der Hälfte der Übertragungsdauer einer Nachrichtenzelle entsprechen.

4. Koppelanordnung nach einem der Ansprüche 1 bis 3,
**dadurch gekennzeichnet**,
daß in der zentralen Speicheranordnung (DSP) jeder der Eingangsleitungen (E1,..., En) ein gesonderter Speicherbereich (SP1, ..., SPn) mit aufeinanderfolgenden, zyklisch für die Zwischenspeicherung von Nachrichtenzellen benutzten Speicherzellen zugeordnet ist,
daß die in der zentralen Steuereinrichtung (ZST) geführte Belegungstabelle aus einer Mehrzahl von den Speicherbereichen individuell zugeordneten Verbindungsspeichern (VSP1, ..., VSPn) gebildet ist,
daß jeder dieser Verbindungsspeicher eine der Anzahl der in einem Speicherbereich (SP1, ..., SPn) vorhandenen Speicherzellen entsprechende Anzahl von Verbindungsspeicherzellen aufweist, in welchen jeweils mit dem Zwischenspeichern einer Nachrichtenzelle ein Belegungssignal sowie die in dieser Nachrichtenzelle enthaltene Wegeinformation speicherbar sind,
daß zu Beginn eines Lese-Steuerzyklus die aktuellen Inhalte der Verbindungsspeicherzellen jedes der Verbindungsspeicher in Registerzellen einer dem jeweiligen Verbindungsspeicher zugeordneten Vergleicheranordnung (Reg1; VG1, ..., Regn; VGn) festgehalten werden,
daß im Verlaufe eines Lese-Steuerzyklus eine festgelegte erste Anzahl von aufeinanderfolgenden Hauptzyklen durchführbar ist, daß in den aufeinanderfolgenden Hauptzyklen jeweils die Vergleicheranordnungen (Reg1; VG1, ..., Regn;VGn) nacheinander aktiviert sind und von der jeweiligen Vergleicheranordnung dabei eine festgelegte Anzahl von dieser zugehörigen, aufeinanderfolgenden Registerzellen hinsichtlich des Vorhandenseins eines Belegungssignals abfragbar ist und nach Maßgabe des jeweiligen Abfrageergebnisses und der in der jeweiligen Registerzelle zusammen mit einem Belegungssignal festgehaltenen Wegeinformation in Verbindung mit der zur Verfügung stehenden Information bezüglich des Betriebszustandes der in Frage kommenden Ausgangsleitung (A1,..., An) ggf. die der jeweiligen Registerzelle zugeordnete Speicherzelle der zentralen Speicheranordnung (DSP) für eine Weiterleitung der darin gerade zwischengespeicherten Nachrichtenzelle angesteuert ist,
daß in dem ersten der Hauptzyklen die Abfrage der Registerzellen dabei mit einer Registerzelle beginnt, die unmittelbar auf diejenige Registerzelle folgt, in welche zuletzt ein Belegungssignal eingetragen worden ist,
und daß die nach der Durchführung sämtlicher Hauptzyklen ggf. noch in Registerzellen der Vergleicheranordnungen (Reg1; VG1, ..., Reg1; VGn) festgehaltenen Belegungssignalen in den unmittelbar nachfolgenden Lese-Steuerzyklus erneut einbezogen werden.

5. Koppelanordnung nach Anspruch 4,
**dadurch gekennzeichnet**
daß innerhalb eines Lese-Steuerzyklus nach Durchführung der ersten Anzahl von Hauptzyklen eine zweite Anzahl von aufeinanderfolgenden, den Hauptzyklen entsprechenden Nebenzyklen durchführbar ist
und daß die zweite Anzahl niedriger als die erste Anzahl gewählt ist und in dem jeweiligen Nebenzyklus von jeder der Vergleicheranordnungen (Reg1; VG1, ..., Regn; VGn) gegenüber einem Hauptzyklus eine größere Anzahl zugeordneter, aufeinanderfolgender Registerzellen abfragbar ist.

6. Koppelanordnung nach Anspruch 4 oder 5,
**dadurch gekennzeichnet**,
daß für im Zuge eines Lese-Steuerzyklus nicht weiterleitbare Nachrichtenzellen in den Registerzellen der Vergleicheranordnungen (Reg1; VG1, ..., Regn; VGn) zusätzlich eine Prioritätsmarkierung gesetzt ist, durch welche diese Nachrichtenzellen in dem unmittelbar nachfolgenden Lese-Steuerzyklus gegenüber den übrigen Nachrichtenzellen vorrangig in die Weiterleitung von Nachrichtenzellen einbezogen werden.

## Claims

1. Coupling arrangement for the reception and buffer storage of information cells, which are transmitted via a plurality of input lines (E1, ..., En) in accordance with an asynchronous transfer mode, and for passing on buffer-stored information cells in accordance with a movement information item, which is in each case contained therein, to an output line which belongs to a plurality of output lines (A1, ..., An), having a central memory arrangement (DSP), which has a plurality of memory cells, it being possible to buffer-store an information cell in each memory cell before passing it on, characterized in that a memory means (ER1,..., ERn) in which at least one complete memory cell, which is transmitted over the respective input line, can be stored, is on the one hand in each case allocated to the input lines (E1,..., En), and a memory region (SP1, ..., SPn) comprising a plurality of memory cells can be allocated, within the central memory arrangement (DSP), to the input lines (E1,..., En), on the other hand, in that a central control device (ZST, FSE, FSA) is provided which is designed in such a manner and is connected to the memory means (ER1,..., ERn) and to the central memory arrangement (DSP) in such a manner that the presence of a complete memory cell is indicated by the respective memory means (ER1,..., ERn) by emitting a request signal of the central control device (ZST, FSE, FSA), in that the request signals which are currently present are initially fixed as a request signal group, in each case in the course of a write control cycle, by the central control device, at defined time intervals, which correspond to a fraction of the transmission duration of an information cell, or in the event of a predetermined number of request signals occurring, in that, subsequently, the information cells which are allocated to the respective request signal group and have previously been stored in the memory means (ER1,..., ERn) are transmitted, in accordance with an allocation table which is available to the central control device (ZST, FSE, FSA) and is managed for the central memory arrangement (DSP), into memory cells, which are not filled by information cells, of the memory regions (SP1,..., SPn) under consideration in the central memory arrangement (DSP), in that, with the transmission of the information cells into the central memory arrangement, the routing information respectively contained in these information cells is additionally entered into the allocation table, in that the current contents of the allocation table are in each case fixed by the central control device (ZST, FSE, FSA) in successive read control cycles, and in that, in the course of the respective read control cycle, the information cells, which are present in the individual memory regions of the central memory arrangement (DSP) for passing on, are fed to the output lines under consideration, taking into account the sequence of their buffer storage, in accordance with the current contents, which have in each case just been fixed, of the allocation table and in accordance with available information items relating to the operating status of the output lines (A1,... An).

2. Coupling arrangement according to Claim 1, characterized in that request signals emitted by the memory means (ER1,... ERn) are incorporated into a request signal group only when at least one memory cell, which is available for the buffer storage of an information cell, is determined by the central control device (ZST, FSE, FSA) using the allocation table for the respective memory region under consideration of the central memory arrangement (DSP).

3. Coupling arrangement according to Claim 1 or 2, characterized in that the defined time intervals for the write control cycles correspond to half the transmission duration of an information cell.

4. Coupling arrangement according to one of Claims 1 to 3, characterized in that, in the central memory arrangement (DSP), a separate memory region (SP1,..., SPn) having successive memory cells, which are used cyclically for the buffer storage of information cells, is allocated to each of the input lines (E1,... En), in that the allocation table which is managed in the central control device (ZST) is formed from a plurality of connecting memories (VSP1, ..., VSPn) which are allocated individually to the memory regions, in that each of these connecting memories has a number of connecting memory cells corresponding to the number of memory cells present in a memory region (SP1,..., SPn), in which connecting memory cells an allocation signal as well as the routing information contained in this information cell can in each case be stored with the buffer storage of an information cell, in that, at the start of a read control cycle, the current contents of the connecting memory cells of each of the connecting memories are fixed in register cells of a comparator arrangement (Reg1; VG1, ..., Regn; VGn) which is allocated to the respective connecting memory, in that a defined first number of successive main cycles can be carried out in the course of a read control cycle, in that the comparator arrangements (Reg1; VG1, ..., Regn; VGn) are in each case activated successively in the successive main cycles and a defined number of successive register cells, associated therewith, can be interrogated for the presence of an allocation signal in this case by the respective comparator arrangement that memory cell of the central memory arrangement (DSP) which is allocated to the respective register cell is possibly selected for passing on the information cell just buffer-stored therein, in accordance with the respective interrogation result and the routing information, which is fixed in the respective register cell together with an allocation signal, in conjunction with the available information relating to the operating status of the output line (A1,...,An) under consideration, in that the interrogation of the register cells in the first of the main cycles in this case starts with a register cell which immediately follows that register cell into which an allocation signal was last entered, and in that the allocation signals which are possibly still fixed in register cells of the comparator arrangements (Reg1; VG1,..., Regn; VGn) after carrying out all the main cycles are once again included in the immediately following read control cycle.

5. Coupling arrangement according to Claim 4, characterized in that a second number of successive auxiliary cycles, which correspond to the main cycles, can be carried out within a read control cycle after carrying out the first number of main cycles, and in that the second number is selected to be less than the first number, and a number of associated, successive register cells can be interrogated in the respective auxiliary cycle by each of the comparator arrangements (Reg1; VG1,..., Regn; VGn), the number of which register cells is greater than that of a main cycle.

6. Coupling arrangement according to Claim 4 or 5, characterized in that a priority marking is additionally set in the register cells of the comparator arrangements (Reg1; VG1,..., Regn; VGn) for information cells which cannot be passed on in the course of a read control cycle, by means of which priority marking these information cells are included in the passing on of information cells, with priority over the other information cells, in the immediately successive read control cycle.

## Revendications

1. Réseau de connexion destiné à recevoir et mémoriser temporairement des cellules de messages suivant un mode de transfert asynchrone par l'intermédiaire de plusieurs lignes (E1, ..., En) d'entrée, et à retransmettre des cellules de messages mémorisées temporairement, en fonction d'une information d'acheminement contenue dans les cellules, à une ligne de sortie faisant partie de plusieurs lignes (A1, ..., An) de sortie, ce réseau comportant un dispositif (DSP) central de mémoire comportant plusieurs cellules de mémoire, une cellule de messages pouvant être mémorisée temporairement dans chaque cellule de mémoire avant une retransmission,
caractérisé en ce que
à chacune des lignes (E1, ..., En) d'entrée sont associés d'une part un moyen (ER1, ..., ERn) de mémorisation, où l'on peut recevoir au moins une cellule de messages complète transmise par la ligne correspondante d'entrée, et d'autre part une zone (SP1, ..., SPn) de mémoire comprenant plusieurs cellules de mémoire, dans le dispositif (DSP) central de mémoire, une installation (ZST, FSE, FSA) centrale de commande est prévue, qui est reliée aux moyens (ER1, ..., ERn) de mémorisation et au dispositif (DSP) central de mémoire et est formée, de sorte que la présence d'une cellule complète de messages est indiquée par respectivement le moyen (ER1, ..., ERn) de mémorisation en délivrant un signal de demande à l'installation (ZST, FSE, FSA) centrale de commande,
pendant des intervalles de temps fixés et correspondant à une fraction de la durée de transmission d'une cellule de messages ou à l'apparition d'un nombre prescrit de signaux de demande respectivement au cours d'un cycle de commande en écriture, les signaux de demande justement présents sont d'abord maintenus en tant que groupe de signaux de demande par l'installation centrale de commande, on transmet ensuite les cellules de messages associées respectivement au groupe de signaux de demande et reçues auparavant dans les moyens (ER1, ..., ERn) de mémorisation, en fonction d'un tableau d'occupation, dont dispose l'installation (ZST, FSE, FSA) centrale de commande, et qui est établi pour le dispositif (DSP) central de mémoire, dans des cellules de mémoire, non occupées par des cellules de messages, des zones (SP1, ..., SPn) de mémoire concernées du dispositif (DSP) central de mémoire,
on enregistre en outre dans le tableau d'occupation, en transmettant les cellules de messages au dispositif central de mémoire, l'information d'acheminement contenue respectivement dans celle-ci,
pendant des cycles de commande en lecture successifs, le contenu actuel du tableau d'occupation est maintenu par l'installation (ZST, FSE, FSA) centrale de commande,
et les cellules de messages, qui sont dans les différentes zones de mémoire du dispositif (DSP) central de mémoire, prêtes à être retransmises, sont envoyées au cours du cycle respectif de commande en lecture, en fonction du contenu actuel justement maintenu du tableau d'occupation et d'informations disponibles relatives à l'état de fonctionnement des lignes (A1, ..., An) de sortie, aux lignes de sortie concernées, en tenant compte de l'ordre, dans lequel elles ont été temporairement mémorisées.

2. Réseau de connexion suivant la revendication 1, caractérisé en ce que des signaux de demande fournis par les moyens (ER1, ..., ERn) de mémorisation ne sont incorporés dans un groupe de signaux de demande, que lorsqu'au moins une cellule de mémoire disponible pour mémoriser temporairement une cellule de messages est déterminée par l'installation (ZST, FSE, FSA) centrale de commande au moyen du tableau d'occupation pour la zone de mémoire concernée du dispositif (DSP) central de mémoire.

3. Réseau de connexion suivant la revendication 1 ou 2, caractérisé en ce que les intervalles de temps fixés pour les cycles de commande en écriture correspondent à la moitié de la durée de transmission d'une cellule de messages.

4. Réseau de connexion suivant l'une des revendications 1 à 3,
caractérisé en ce que
dans le dispositif (DSP) central de mémoire, une zone (SP1, ..., SPn) particulière de mémoire comportant des cellules de mémoire se succédant et utilisées pour la mémorisation intermédiaire de cellules de messages, est associée à chacune des lignes (E1, ..., En) d'entrée,
le tableau d'occupation établi dans l'installation (ZST) centrale de commande est formé de plusieurs mémoires (VSP1, ..., VSPn) de liaison associées individuellement aux zones de mémoire,
chacune de ces mémoires de liaison comporte un nombre de cellules de mémoire de liaison, qui correspond au nombre des cellules de mémoire présentes dans une zone (SP1, ..., SPn) de mémoire, un signal d'occupation ainsi que l'information d'acheminement contenue dans cette cellule de messages pouvant être mémorisés respectivement dans ces cellules de mémoire de liaison en mémorisant temporairement une cellule de messages,
au début d'un cycle de commande en lecture, les contenus actuels des cellules de chacune des mémoires de liaison sont maintenus dans des cellules de registre d'un dispositif (Reg1; VG1, ..., Regn; VGn) comparateur associé respectivement à la mémoire de liaison,
au cours d'un cycle de commande en lecture, on peut effectuer un premier nombre fixé de cycles principaux successifs,
les dispositifs (Reg1; VG1, ..., Regn; VGn) comparateurs sont chacun activés les uns après les autres pendant les cycles successifs principaux et un nombre fixé de ces cellules de registre successives associées peut être interrogé par le dispositif comparateur correspondant en ce qui concerne la présence d'un signal d'occupation et éventuellement la cellule de mémoire, du dispositif (DSP) central de mémoire, associée respectivement à la cellule de registre est commandée, en fonction respectivement du résultat de l'interrogation et de l'information d'acheminement, qui est maintenue dans la cellule de registre avec un signal d'occupation, et qui se rapporte à l'information disponible relative à l'état de fonctionnement de la ligne (A1, ..., An) concernée, pour retransmettre la cellule de messages, qui vient juste d'y être mémorisée temporairement,
lors du premier des cycles principaux, l'interrogation des cellules de registre commence avec une cellule de registre, qui suit directement celle des cellules de registre, où il a été inséré en dernier un signal d'occupation,
et les signaux d'occupation maintenus après l'exécution de tous les cycles principaux éventuellement encore dans des cellules de registre des dispositifs (Reg1; VG1, ..., Regn; VGn) comparateurs sont de nouveau incorporés dans les cycles de commande en lecture immédiatement suivants.

5. Réseau de connexion suivant la revendication 4,
caractérisé en ce que
on peut effectuer un deuxième nombre de cycles secondaires successifs correspondant aux cycles principaux, dans un cycle de commande en lecture après l'exécution du premier nombre de cycles principaux,
le deuxième nombre est choisi plus petit que le premier nombre et un nombre de cellules de registre successives associées plus grand que lors d'un cycle principal peut être interrogé pendant chaque cycle secondaire par chacun des dispositifs (Reg1; VG1, ..., Regn; VGn) comparateurs.

6. Réseau de connexion suivant les revendications 4 ou 5,
caractérisé en ce que, pour des cellules de messages non retransmises au cours d'un cycle de commande en lecture, il est établi en plus dans les cellules de registre des dispositifs (Reg1; VG1, ..., Regn; VGn) comparateurs un repère de priorité, par lequel ces cellules de messages sont incorporées dans le cycle de commande en lecture immédiatement suivant, prioritairement par rapport aux autres cellules de messages, dans la retransmission de cellules de messages.
